# EUROPÄISCHE PATENTSCHRIFT

(11) **EP 1 884 390 B1**
(45) Veröffentlichungstag und Bekanntmachung des Hinweises auf die Patenterteilung: **11.02.2015**
(21) Anmeldenummer: 07010756.0
(22) Anmeldetag: 31.05.2007
(51) Int. Cl.: B60J 7/22

(54) **Windschott für ein Kraftfahrzeug und Kraftfahrzeug mit einem solchen Windschott**
Wind stop for a motor vehicle and motor vehicle with such a wind stop
Pare-vent pour un véhicule automobile et véhicule automobile doté d'un tel pare-vent

(30) Priorität: 26.07.2006 DE 102006034445
(43) Veröffentlichungstag der Anmeldung: 06.02.2008
(73) Patentinhaber: Dr. Ing. h.c. F. Porsche AG, 70435 Stuttgart (DE)
(72) Erfinder: Hermann, Felix, 71229 Leonberg (DE); Beierl, Dominik, 70825 Korntal-Münchingen (DE)

(56) Entgegenhaltungen:
- WO-A-2005/080105
- DE-A1- 19 714 938
- DE-C1- 19 725 217

## Beschreibung

Die vorliegende Erfindung betrifft ein Windschott für ein Kraftfahrzeug nach dem Oberbegriff des Anspruchs 1 sowie ein Kraftfahrzeug mit einem solchen Windschott.

Ein solches Windschott und ein solches Kraftfahrzeug sind aus der DE 197 25 217 C1 bekannt. Bei dem bekannten Windschott ist ein Umlenkträger gelenkig an einem Aufspannbügel befestigt. Der Umlenkträger weist ein Querelement auf, das als Umlenkung für ein flexibles auf- und abrollbares Flächengebilde dient und zum Auf- und Abrollen des Flächengebildes horizontal mittels einer Art Scherengelenk verschoben wird. Eine Rollachse, auf die das Flächengebilde aufrollbar und von der es abrollbar ist, ist heckseitig ortsfest in dem Kraftfahrzeug befestigt. Ein solches Scherengelenk ist aufwändig zu realisieren und benötigt relativ viel Raum.

Es ist die Aufgabe der vorliegenden Erfindung, ein Windschott anzugeben, das auf technisch einfache und zuverlässige Weise in eine Wirkstellung, in der es als Windschutz dient, und in eine Ruhestellung, in der es nicht als Windschutz dient, bringbar ist.

Diese Aufgabe wird gemäß der technischen Lehre des Anspruchs 1 oder des Anspruchs 20 gelöst. Vorteilhafte Ausgestaltungen der Erfindung können den abhängigen Ansprüchen entnommen werden.

Bei dem erfindungsgemäßen Windschott ist der Spriegel um eine in Querrichtung des Kraftfahrzeugs verlaufende, ortsfeste Schwenkachse schwenkbar gelagert. Dabei ist die Schwenkachse des Spriegels in Längsrichtung des Kraftfahrzeugs von der Schwenkachse des Aufspannbügels beabstandet. Ferner ist der Aufspannbügel über einen beweglichen Kopplungsmechanismus mit dem Spriegel verbunden. Das erfindungsgemäße Kraftfahrzeug kann insbesondere ein Cabriolet sein und enthält ein erfindungsgemäßes Windschott.

Aufgrund der vorliegenden Erfindung sind der Aufspannbügel und der Spriegel nicht direkt miteinander verbunden, sondern über eine Kopplungskinematik, den beweglichen Kopplungsmechanismus. Dieser ist beim Verschwenken von Aufspannbügel und Spriegel insbesondere so beweglich, dass sich zumindest Teile des Kopplungsmechanismus relativ zum Aufspannbügel und zum Spriegel bewegen können. Das Koppeln von Aufspannbügel und Spriegel bewirkt, dass das Verschwenken des einen ebenfalls zum Verschwenken des anderen führt, da der eine den anderen mitnimmt. Zum Verschwenken von Aufspannbügel und Spriegel ist kann ein einziger Antrieb ausreichen. Das Verschwenken des Windschotts zwischen einer Ruhestellung, in der es im Wesentlichen auf Höhe einer Gürtellinie des Kraftfahrzeugs liegt und keinen Windschutz gewährleistet, und einer Wirkstellung, in der es eine im Wesentlichen vertikale Ausrichtung hat und einen Windschutz gewährleistet, ist somit auf besonders einfache Weise möglich. Durch die getrennte und ortsfeste Lagerung von Aufspannbügel und Spriegel können deren Formen und Dimensionen vorteilhafterweise weitgehend unabhängig voneinander ausgestaltet werden. Ferner ist eine besonders gute Stabilität und Zuverlässigkeit der Anordnung gegeben. Der Aufspannbügel und der Spriegel sind insbesondere zum Ausführen einer rotierenden Bewegung gelagert. Vorteilhafterweise ist die Schwenkachse des Aufspannbügels in Vorwärtsfahrtrichtung des Kraftfahrzeugs vor der Schwenkachse des Spriegels angeordnet.

In einer vorteilhaften Ausgestaltung der Erfindung ist der Kopplungsmechanismus in seitlichen Bereichen des Aufspannbügels und des Spriegels mit diesen verbunden. Dadurch lässt sich eine besonders kompakte Anordnung und ein kurzer Verfahrweg zum Verschwenken von Aufspannbügel und Spriegel erreichen, um so auf besonders einfache Weise einen Wechsel zwischen der Wirkstellung und der Ruhestellung des Windschotts zu gewährleisten.

Vorzugsweise ist der Kopplungsmechanismus sowohl mit dem Aufspannbügel als auch mit dem Spriegel drehbar verbunden. Der Kopplungsmechanismus kann somit an dem Aufspannbügel und dem Spriegel gelenkig gelagert sein. Eine solche Verbindung kann einfach und zuverlässig realisiert werden.

In einer weiteren vorteilhaften Ausgestaltung ist der Kopplungsmechanismus mit dem Aufspannbügel und dem Spriegel nach Art eines Viergelenks verbunden. Ein solches Viergelenk lässt sich kompakt und kostengünstig ausgestalten. Ferner kann auf einfache Weise ein Zwischengetriebe zwischen dem Aufspannbügel und dem Spriegel realisiert werden, so dass ein bestimmtes Übersetzungsverhältnis zwischen dem Verschwenken des Aufspannbügels und dem Verschwenken des Spriegels eingestellt werden kann.

In einer besonders bevorzugten Ausgestaltung der Erfindung weist der Kopplungsmechanismus einen Lenkhebel auf, der mit dem Aufspannbügel und dem Spriegel verbunden ist. Dabei ist ein als Verbindungsstelle zwischen dem Aufspannbügel und dem Lenkhebel ausgebildeter Drehpunkt von einem zum schwenkbaren Lagern des Aufspannbügels ausgebildeten Drehpunkt des Aufspannbügels und ein als Verbindungsstelle zwischen dem Spriegel und dem Lenkhebel ausgebildeter Drehpunkt von einem zum schwenkbaren Lagern des Spriegels ausgebildeten Drehpunkt des Spriegels beabstandet. Diese Anordnung kann besonders kompakt ausgebildet werden. Des Weiteren ist der Lenkhebel besonders kostengünstig herstellbar und montierbar und gewährleistet ein festes und zuverlässiges Verbinden und Verschwenken.

Besonders vorteilhaft ist der zum schwenkbaren Lagern des Spriegels ausgebildete Drehpunkt als ein Antriebspunkt zum Anschießen eines Antriebs zum Verschwenken des Windschotts ausgestaltet. Durch das Angreifen des Antriebs an diesem Drehpunkt ist ein effizientes Verschwenken des Windschotts und Auf- oder Abrollen des Flächengebildes gewährleistet.

Bevorzugt weist der Kopplungsmechanismus einen ersten Lenkhebel, einen zweiten Lenkhebel und einen dritten Lenkhebel auf, die in einem gemeinsamen Drehpunkt drehbar miteinander verbunden sind. Der erste Lenkhebel ist ferner mit dem Aufspannbügel und der zweite Lenkhebel mit dem Spriegel drehbar verbunden. Der dritte Lenkhebel weist einen Antriebspunkt zum Anschließen eines Antriebs zum Verschwenken des Windschotts auf. Durch diese Anordnung ist ein Viergelenk ausgebildet, mit dem kompakt und zuverlässig eine gute Steuerung der Abläufe zwischen dem Aufspannbügel und dem Spriegel ermöglicht wird. Ferner lässt sich so besonders effizient ein Zwischengetriebe zum Einstellen eines Übersetzungsverhältnisses zwischen der Verschwenkbewegung des Aufspannbügels und der Verschwenkbewegung des Spriegels erreichen.

Besonders bevorzugt ist der Kopplungsmechanismus so angeordnet und mit dem Aufspannbügel und dem Spriegel verbunden, dass zwischen einem Verschwenken des Aufspannbügels und einem Verschwenken des Spriegels ein Übersetzungsverhältnis von in etwa 1:2 festgelegt ist. In seiner Ruhestellung liegt das Windschott, d. h. sowohl der Aufspannbügel als auch der Spriegel, im Wesentlichen auf Höhe der Gürtellinie des Kraftfahrzeugs. In der Wirkstellung des Windschotts hat der Aufspannbügel eine im Wesentlichen vertikale Lage, d. h. er ist um ca. 90° gegenüber der Ruhestellung verschwenkt. Der Spriegel dagegen hat eine horizontale, um ca. 180° gegenüber der Ruhestellung verschwenkte Lage. Aufgrund des durch den Kopplungsmechanismus realisierten Übersetzungsverhältnisses von 1:2 kann das unterschiedliche Verschwenken von Aufspannbügel und Spriegel erreicht werden.

In einer vorteilhaften Ausgestaltung der Erfindung ist die Rollachse zum Auf- und Abrollen des Flächengebildes in dem Kraftfahrzeug, insbesondere in seinem Heckbereich, ortsfest ausgebildet. Der Spriegel ist dabei als Umlenkelement zum Umlenken des abgerollten Flächengebildes angeordnet. Beim Verschwenken des Windschotts wird somit das an dem Aufspannbügel befestigte Flächengebilde von der Rollachse abgerollt. Das abgerollte Flächengebilde wird dabei von dem Spriegel umgelenkt und gespannt. Ein Teil des Flächengebildes spannt dann zwischen der Befestigung des Flächengebildes an dem Aufspannbügel und dem als Umlenkelement dienenden Spriegel eine Wirkfläche auf, die als Windschutz dient. Dieser Teil des Flächengebildes verläuft vorteilhafterweise weitgehend vertikal. Ein anderer Teil spannt zwischen dem als Umlenkelement dienenden Spriegel und der Rollachse eine Abdeckfläche auf, die vorteilhafterweise z. B. als Abdeckung für einen Fondbereich des Kraftfahrzeugs oder einen Verdeckkasten eines Cabriolets dienen kann. Dieser andere Teil des Flächengebildes verläuft vorteilhafterweise weitgehend horizontal.

In einer weiteren vorteilhaften Ausgestaltung ist die Rollachse zum Auf- und Abrollen des Flächengebildes an dem Spriegel, insbesondere an einem parallel zu seiner Schwenkachse verlaufenden Quersteg des Spriegels, ausgebildet. Dies ermöglicht eine besonders Platz sparende Ausgestaltung des Windschotts.

In einer besonders bevorzugten Ausgestaltung der Erfindung ist ein weiteres flexibles Flächengebilde vorhanden, das an dem Kraftfahrzeug, insbesondere in seinem Heckbereich, ortsfest befestigt und um eine an dem Spriegel ausgebildete Rollachse auf- und abrollbar ist. Dadurch spannt das Flächengebilde in der Wirkstellung des Windschotts zwischen der Befestigung des Flächengebildes an dem Aufspannbügel und der an dem Spriegel ausgebildeten und ihr zugeordneten Rollachse eine Wirkfläche auf, die als Windschutz dient. Das Flächengebilde verläuft in diesem Fall vorteilhafterweise weitgehend vertikal. Das weitere Flächengebilde spannt zwischen der an dem Spriegel ausgebildeten und ihr zugeordneten Rollachse und der ortsfesten Befestigung an dem Kraftfahrzeug eine Abdeckfläche auf, die vorteilhafterweise z. B. als Abdeckung für einen Fondbereich des Kraftfahrzeugs oder einen Verdeckkasten eines Cabriolets dienen kann. Das weitere Flächengebilde verläuft in diesem Fall vorteilhafterweise weitgehend horizontal.

Bevorzugt sind die beiden Flächengebilde so angeordnet, dass sie um die gleiche Rollachse auf- und abrollbar und in ihren aufgerollten Zuständen übereinander liegend auf der Rollachse aufgewickelt sind. Dies ermöglicht eine besonders kompakte Ausgestaltung des Windschotts und das Realisieren des Auf- und Abrollens der Flächengebilde kann mit wenigen Bauteilen ermöglicht werden.

Besonders bevorzugt weist das Flächengebilde einen netzförmigen Stoff auf. Dieser ist besonders flexibel und lässt sich somit besonders gut auf- und abrollen. Ferner lässt sich der Stoff durch das Verschwenken des Spriegels gut spannen, so dass er einen besonders effizienten Windschutz bietet.

In einer vorteilhaften Ausgestaltung der Erfindung sind der Aufspannbügel und der Spriegel in sich gegenüber liegenden, seitlichen Bereichen insbesondere einer Karosserie des Kraftfahrzeugs schwenkbar gelagert. Dadurch ist eine besonders stabile Lagerung gegeben.

In einer weiteren vorteilhaften Ausgestaltung sind seitliche Abdeckteile vorhanden, die so ausgestaltet und angeordnet sind, dass sie in der Wirkstellung des Windschotts Abdeckstellungen zum im Wesentlichen horizontalen Abdecken von zwischen den seitlichen Bereichen des Kraftfahrzeugs und dem abgerollten Flächengebilde vorhandenen Spalte einnehmen. Auf diese Weise lassen sich durch die Spalte gebildete Lücken zwischen den seitlichen Bereichen und dem abgerollten Flächengebilde auf technisch einfache Weise schließen, so dass eine weitgehend durchgängige Abdeckung gewährleistet ist.

In einer besonders bevorzugten Ausgestaltung der Erfindung sind seitliche Windschutzteile vorhanden, die so ausgestaltet und schwenkbar an dem Aufspannbügel angeordnet sind, dass sie in der Wirkstellung des Windschotts zwischen seitlichen Bereichen des Aufspannbügels und dem abgerollten, den Windschutz gewährleistenden Flächengebilde seitliche Wirkflächen zum Erzeugen eines zusätzlichen Windschutzes aufspannen. Dadurch lassen sich vorteilhafterweise Lücken zwischen den seitlichen Bereichen des Aufspannbügels und dem abgerollten Flächengebilde auf technisch einfache Weise schließen, so dass eine weitgehend durchgängige Wirkfläche, und damit ein besonders guter Windschutz, gewährleistet ist.

Bevorzugt sind der Aufspannbügel, die an ihm angebrachten seitlichen Windschutzteile und der Spriegel so ausgebildet und angeordnet, dass der Spriegel beim Verschwenken des Windschotts in seine Wirkstellung die seitlichen Windschutzteile so verschwenkt, dass sie die zusätzlichen Wirkflächen aufspannen. Beim Verschwenken des Aufspannbügels nach oben in seine Wirkstellung verschwenken ebenfalls die seitlichen Windschutzteile. Durch das Verschwenken des Spriegels kann dieser dabei die seitlichen Windschutzteile nach innen lenken, so dass sie zusammen mit dem abgerollten und aufgespannten Flächengebilde die Wirkfläche für den Windschutz bilden.

Vorzugsweise sind die seitlichen Abdeckteile und/oder die seitlichen Windschutzteile so ausgestaltet und angeordnet, dass sie in einer Ruhestellung des Windschotts, in der es nicht als Windschutz dient, unter einer Verkleidung des Kraftfahrzeugs verdeckt sind. Dadurch sind die seitlichen Abdeckteile und/oder die seitlichen Windschutzteile in ihrer Ruhestellung gut geschützt und besonders Platz sparend untergebracht.

Besonders bevorzugt ist der Kopplungsmechanismus unter einer Verkleidung des Kraftfahrzeugs verdeckt angeordnet. Der Kopplungsmechanismus ist dadurch vor schädlichen äußeren Einflüssen geschützt. Außerdem ist so ein gutes Aussehen des Kraftfahrzeugs gewährleistet. Der Kopplungsmechanismus ist insbesondere unterhalb der Gürtellinie des Kraftfahrzeugs angebracht.

Weitere Vorteile und vorteilhafte Ausgestaltungen der Erfindung ergeben sich aus der folgenden Beschreibung von bevorzugten Beispielen und Ausführungsbeispielen unter Bezugnahme auf die beigefügten Zeichnungen. Es zeigen:
- Fig. 1A, 1B: schematische, perspektivische Darstellungen eines geöffneten, seitlichen Bereichs eines Cabriolets mit einem Kopplungsmechanismus für einen Aufspannbügel und einen Spriegel eines Windschotts,
- Fig. 2: eine schematische Seitenansicht einer Anordnung von Aufspannbügel, Spriegel und einem diese beiden verbindenden Kopplungsmechanismus nach Fig. 1,
- Fig. 3A, 3B: geschnittene Darstellungen der Kopplungsstelle von Aufspannbügel und Kopplungsmechanismus und der Kopplungsstelle von Spriegel und Kopplungsmechanismus gemäß der Anordnung nach Fig. 2,
- Fig. 4: eine schematische Draufsicht der Anordnung nach Fig. 2,
- Fig. 5A-5D: schematische, perspektivische Darstellungen von Aufspannbügel und Spriegel in verschiedenen Verschwenkstellungen,
- Fig. 6: eine schematische Seitenansicht einer Anordnung von Aufspannbügel, Spriegel und einem diese beiden verbindenden, weiteren Kopplungsmechanismus, der drei Hebel aufweist,
- Fig. 7: eine schematische, perspektivische Darstellung des Windschotts in seiner Wirkstellung mit einer seitlichen Abdeckklappe zum Abdecken eines zwischen dem seitlichen Bereich des Cabriolets und einem abgerollten Flächengebilde vorhandenen Spalts,
- Fig. 8: eine schematische, perspektivische, teilweise geschnittene Darstellung des Windschotts in seiner Ruhestellung mit einem seitlichen Windschutzteil, das schwenkbar an dem Aufspannbügel befestigt und unter einer Verkleidung des Cabriolets verdeckt ist,
- Fig. 9: eine schematische Schnittdarstellung des Windschutzteils und seiner Lagerung an dem Aufspannbügel nach Fig. 8,
- Fig. 10: eine schematische, perspektivische Darstellung des Windschotts nach Fig. 8 während seinem Verschwenken,
- Fig. 11: eine schematische, perspektivische Darstellung des Windschotts nach Fig. 8 in seiner Wirkstellung,
- Fig. 12: eine schematische, perspektivische Darstellung eines anderen Ausführungsbeispiels eines Windschotts mit einer an dem Spriegel angeordneten Rollachse und
- Fig. 13: eine schematische Schnittdarstellung des Windschotts nach Fig. 12.

Im Folgenden werden für gleiche oder gleichwirkende Elemente gleiche Bezugszeichen verwendet.

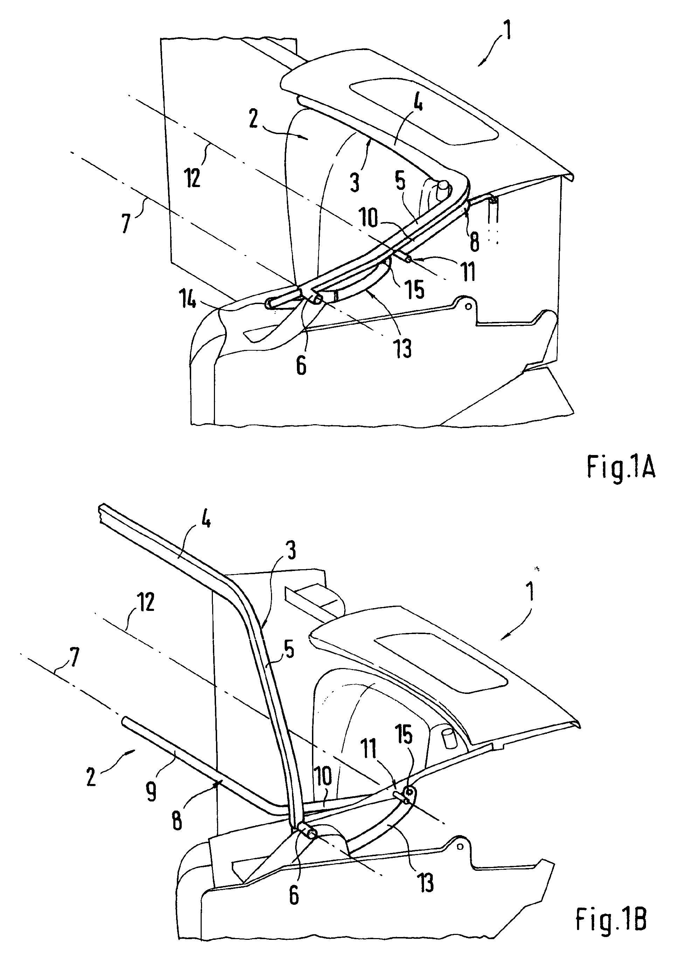

Die Fig. 1A und 1B zeigen schematische, perspektivische Darstellungen eines linken, seitlichen Bereichs eines Cabriolets 1, der insbesondere einem Fondbereich des Cabriolets 1 benachbart ist. Der seitliche Bereich des Cabriolets 1 ist hier ein Bereich einer Karosserie des Cabriolets 1. Die Karosserieverkleidung ist in den Fig. 1A und 1B geöffnet dargestellt. Das Cabriolet 1 weist ein Windschott 2 auf, das in Querrichtung des Cabriolets 1 im Wesentlichen spiegelsymmetrisch zu einer in Längsrichtung durch seine Mitte verlaufenden Achse aufgebaut ist. In den Fig. 1A und 1B sind daher aus Gründen der Übersichtlichkeit nur der linke, seitliche Bereich des Cabriolets 1 und ein linker Teil des Windschotts 2 gezeigt. Das Windschott 2 enthält einen Aufspannbügel 3, der zwei voneinander beabstandete, sich gegenüber liegende Seitenholme enthält, die durch einen Quersteg 4, vorteilhafterweise einstückig, miteinander verbunden sind. Die Fig. 1A und 1B zeigen einen linken Seitenholm 5 des Aufspannbügels 3. Der Aufspannbügel 3 ist mittels sich in Querrichtung erstreckenden Zapfen ortsfest und drehbar in sich gegenüber liegenden, seitlichen Bereichen der Karosserie des Cabriolets 1 gelagert. Die Fig. 1A und 1B zeigen einen Zapfen 6, der an dem linken Seitenholm 5 ausgebildet ist und sich ausgehend von diesem nach außen erstreckt. Der Aufspannbügel 3 ist somit um eine sich in Querrichtung erstreckende, ortsfeste Schwenkachse 7 schwenkbar an der Karosserie gelagert. Die Schwenkachse 7 verläuft parallel zu dem Quersteg 4 des Aufspannbügels 3.

Das Windschott 2 enthält ferner einen hier bügelförmig ausgestalteten Spriegel 8, der zwei voneinander beabstandete, sich gegenüber liegende Seitenholme enthält, die durch einen Quersteg 9, vorteilhafterweise einstückig, miteinander verbunden sind. Die Fig. 1A und 1B zeigen einen linken Seitenholm 10 des Spriegels 8. Der Spriegel 8 ist mittels sich in Querrichtung erstreckenden Zapfen ortsfest und drehbar in den sich gegenüber liegenden, seitlichen Bereichen der Karosserie des Cabriolets 1 gelagert. Die Fig. 1A und 1B zeigen einen Zapfen 11, der an dem linken Seitenholm 10 ausgebildet ist und sich ausgehend von diesem nach außen erstreckt. Der Spriegel 8 ist somit um eine sich in Querrichtung erstreckende, ortsfeste Schwenkachse 12 schwenkbar an der Karosserie gelagert. Die Schwenkachse 12 verläuft parallel zu dem Quersteg 9 des Spriegels 8. Die Schwenkachse 7 des Aufspannbügels 3 und die Schwenkachse 12 des Spriegels 8 sind in Längsrichtung des Cabriolets 1 voneinander beabstandet. Im vorliegenden Ausführungsbeispiel ist die Schwenkachse 12 in Vorwärts-Fahrtrichtung des Cabriolets 1 hinter der Schwenkachse 7 ausgebildet.

Der Aufspannbügel 3 und der Spriegel 8 sind mit einem Kopplungsmechanismus miteinander verbunden. Der Kopplungsmechanismus ist ein beweglicher Kopplungsmechanismus, der im vorliegenden Ausführungsbeispiel einen länglichen, leicht gebogenen Lenkhebel 13 aufweist, dessen eines Ende in einem Drehpunkt 14 an den Aufspannbügel 3 und dessen anderes Ende in einem Drehpunkt 15 an den Spriegel 8 drehbar angelenkt ist. Der Drehpunkt 14 befindet sich dabei an dem Seitenholm 5 des Aufspannbügels 3, insbesondere in einem Endbereich des Seitenholms 5, der der Anbindung mit dem Quersteg 4 gegenüber liegt. Der Drehpunkt 15 befindet sich an dem Seitenholm 10 des Spriegels 8, insbesondere in einem Endbereich des Seitenholms 10, der der Anbindung mit dem Quersteg 9 gegenüber liegt. Der Lenkhebel 13 ist beweglich gegenüber dem Aufspannbügel 3 und dem Spriegel 8, d. h. während eines Verschwenkvorgangs ändert er seine Ausrichtung gegenüber diesen. Im vorliegenden Ausführungsbeispiel ist der Kopplungsmechanismus sowie dessen Anlenkung an den Aufspannbügel 3 und den Spriegel 8 unter der Karosserieverkleidung des Cabriolets 1 angeordnet. In montiertem Zustand ist der Kopplungsmechanismus daher von der Karosserie verdeckt. Dies gewährleistet ein gutes Aussehen des Cabriolets 1 und schützt den Kopplungsmechanismus vor schädlichen äußeren Einflüssen. Im vorliegenden Ausführungsbeispiel ist der in dem linken, seitlichen Bereich des Cabriolets 1 angebrachte Kopplungsmechanismus mit dem Lenkhebel 13 ebenfalls entsprechend in einem rechten, seitlichen Bereich des Cabriolets 1 vorgesehen. Dadurch wird der Verschwenkvorgang deutlich stabiler. Es ist aber nicht notwendig, den Kopplungsmechanismus an beiden Seiten anzuordnen. Prinzipiell ist eine solche Kopplung an einer Seite ausreichend, um ein Verschwenken des Windschotts 2 zu gewährleisten.

In der Fig. 1A ist das Windschott 2 in einer Ruhestellung dargestellt ist, in der es in Längsrichtung des Cabriolets 1 nach hinten abgelegt ist und keine Wirkfläche zum Schutz vor Wind aufspannt. Der Aufspannbügel 3 und der Spriegel 8 sind nach hinten verschwenkt und liegen im Wesentlichen auf der Höhe einer Gürtellinie des Cabriolets 1. Der Aufspannbügel 3 liegt dabei auf dem Spriegel 8 auf. In der Fig. 1B ist das Windschott 2 in einer Wirkstellung dargestellt, in der es eine Wirkfläche zum Schutz eines Passagierraums des Cabriolets 1 vor Wind aufspannt. Der Aufspannbügel 3 ist ausgehend von der Ruhestellung um ca. 90° nach oben verschwenkt, so dass sich seine Seitenholme nahezu vertikal nach oben erstrecken. Der Spriegel 8 ist ausgehend von der Ruhestellung um ca. 180° nach vorne verschwenkt, so dass er im Wesentlichen auf der Höhe der Gürtellinie des Cabriolets 1 liegt und seine Seitenholme nahezu horizontal verlaufen. Der Quersteg 9 verläuft in etwa unterhalb des Querstegs 4. Zum Verschwenken des Windschotts 2 zwischen seiner Ruhe- und seiner Wirkstellung wird im vorliegenden Ausführungsbeispiel der Spriegel 8 an seinem Zapfen 11 mit einem Antrieb angetrieben. Mit dem Antrieb wird hier eine Drehbewegung auf den Zapfen 11 übertragen, die das Verschwenken des Spriegels 8 bewirkt. Die Verschwenkbewegung des Spriegels 8 überträgt sich auf den Lenkhebel 13 und von diesem auf den Aufspannbügel 3. Es ist aber ebenso möglich, Aufspannbügel 3, Lenkhebel 13 und Spriegel 8 so anzuordnen, dass der Antrieb über den Aufspannbügel 3 oder den Lenkhebel 13 erfolgen kann. Der Aufspannbügel 3 und der Spriegel 8 können in ihrer abgelegten Ruhestellung vorteilhafterweise in einer insbesondere geschlossenen Kassette geschützt vor schädlichen äußeren Einflüssen abgelegt sein. Die Kassette öffnet sich vorzugsweise automatisch, wenn das Windschott 2 in seine Wirkstellung aufgestellt werden soll.

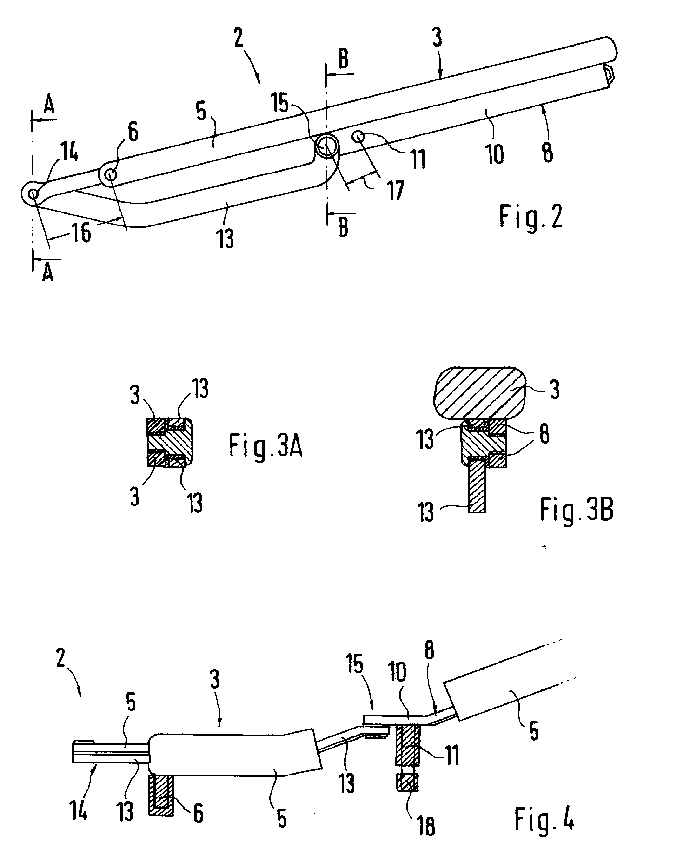

Fig. 2 zeigt eine Seitenansicht der Anordnung von Aufspannbügel 3, Spriegel 8 und dem diese beiden verbindenden Lenkhebel 13 in der Ruhestellung des Windschotts 2 nach Fig. 1A. Zu sehen sind seitliche Ansichten des Seitenholms 5, der an dem Drehpunkt 14 mit dem einen Ende des Lenkhebels 13 gelenkig verbunden ist, und des Seitenholms 10, der an dem Drehpunkt 15 mit dem anderen Ende des Lenkhebels 13 gelenkig verbunden ist. Der Spriegel 8 und der Lenkhebel 13 sind unterhalb des Aufspannbügels 3 angeordnet. Dargestellt ist ebenfalls der Zapfen 6 zum schwenkbaren Lagern des Aufspannbügels 3 und der Zapfen 11 zum schwenkbaren Lagern des Spriegels 8. Der Drehpunkt 14 ist in der axialen Verlängerung zu dem Zapfen 6 am Ende des Aufspannbügels 3 ausgebildet. Dabei ist der Drehpunkt 14 in der Ruhestellung des Windschotts 2 dem Zapfen 6 in Vorwärts-Fahrtrichtung vorgelagert. Der Drehpunkt 14 hat von dem Zapfen 6 einen bestimmten Abstand 16. Der Drehpunkt 15 ist in der axialen Verlängerung zu dem Zapfen 11 am Ende des Spriegels 8 ausgebildet. Dabei ist der Drehpunkt 15 in der Ruhestellung des Windschotts 2 dem Zapfen 11 in Vorwärts-Fahrtrichtung vorgelagert. Der Drehpunkt 15 hat von dem Zapfen 11 einen bestimmten Abstand 17. Im vorliegenden Ausführungsbeispiel ist der Abstand 16 größer als der Abstand 17. Die beiden Abstände 16, 17 sind so bemessen, dass beim Verschwenken des Windschotts 2 zwischen dem Aufspannbügel 3 und dem Spriegel 8 ein Übersetzungsverhältnis von 1:2 eingestellt ist. Dies bedeutet, dass der Spriegel 8 beim Verschwenken einen doppelt so weiten Weg zurücklegt, als der Aufspannbügel 3. Dadurch wird gewährleistet, dass der Spriegel 8 beim Verschwenken des Windschotts 2 zwischen seiner Ruhe- und seiner Wirkstellung einen Winkel von annähernd 180° überstreicht, während der Aufspannbügel 3 einen Winkel von annähernd 90° überstreicht.

Der Lenkhebel 13 hat im vorliegenden Ausführungsbeispiel eine leicht nach unten gebogene Form. Ausgehend von seiner Anlenkung in dem Drehpunkt 15 an den Spriegel 8 verläuft der Lenkhebel 13 zunächst für eine kurze Strecke leicht gebogen nach unten, so dass sich ein Abstand zwischen dem Seitenholm 5 und dem Lenkhebel 13 ergibt. Daran anschließend verläuft der Lenkhebel 13 für eine größere längliche Strecke nahezu parallel zu dem Seitenholm 5. Durch eine leichte Biegung nach oben ändert sich der Verlauf des Lenkhebels 13, so dass er auf den Drehpunkt 14 zuläuft, in dem er auf das Ende des Aufspannbügels 3 trifft und drehbar an diesem befestigt ist. Durch diese Form des Lenkhebels 13 lässt sich eine besonders gute Übertragung der Verschwenkbewegung zwischen dem Spriegel 8 und dem Aufspannbügel 3 erreichen. Der an dem Spriegel 8 ausgebildete Zapfen 11 dient zum Antreiben des Spriegels 8 mittels eines dazu geeigneten Antriebs. Dieser kann beispielsweise ein motorischer Antrieb mit einem Elektromotor oder ein hydraulischer Antrieb sein. Der Antrieb greift somit an der Schwenkachse 12 des Spriegels 8 an. In der Fig. 2 sind ein vertikaler Schnitt A-A durch den Drehpunkt 14 und ein vertikaler Schnitt B-B durch den Drehpunkt 15 eingezeichnet.

Fig. 3A zeigt eine Darstellung des Schnitts A-A gemäß der Fig. 2 in dem Drehpunkt 14 als Verbindungsstelle von Aufspannbügel 3 und Lenkhebel 13. Fig. 3B zeigt eine Darstellung des Schnitts B-B gemäß der Fig. 2 in dem Drehpunkt 15 als Verbindungsstelle von Spriegel 8 und Lenkhebel 13. Die jeweiligen Komponenten können in den Drehpunkten 14 und 15 durch Entkopplungshülsen voneinander entkoppelt sein.

Fig. 4 zeigt eine Draufsicht der Anordnung nach Fig. 2. Der oben liegende Aufspannbügel 3 ist in einem mittleren Bereich geschnitten dargestellt, um eine Darstellung des unter ihm befindlichen Zapfens 11 und des Drehpunkts 15 zu ermöglichen. Die Fig. 4 zeigt einen Antrieb 18, der an dem Zapfen 11 befestigt ist und zum Verschwenken des Spriegels 8, und damit des kompletten Windschotts 2, dient.

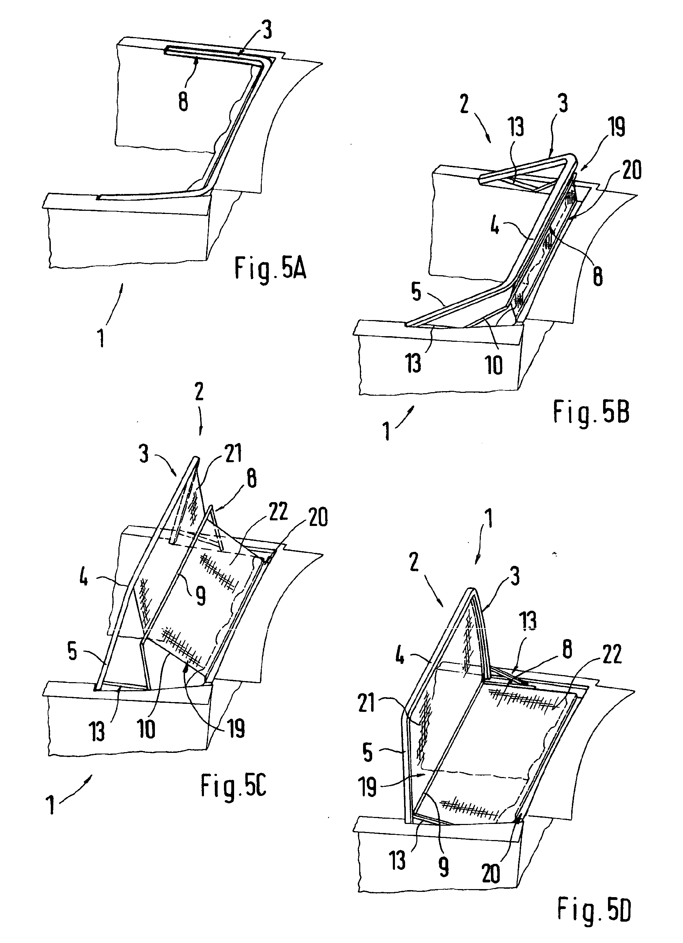

Die Fig. 5A-5D zeigen schematische, perspektivische Darstellungen der beiden seitlichen Bereiche des Cabriolets 1 mit dem Windschott 2. Der Aufspannbügel 3 und der Spriegel 8 sind in den Fig. 5A-5D in verschiedenen Verschwenkstellungen des Windschotts 2 dargestellt. Der Lenkhebel 13 zum Verbinden von Aufspannbügel 3 und Spriegel 8 ist hier außerhalb der Karosserieverkleidung angebracht. Zum Aufspannen der Wirkfläche für den Windschutz ist an dem Quersteg 4 des Aufspannbügels 3 eine vordere Stirnkante eines flexiblen Flächengebildes befestigt. Das Flächengebilde wird hier durch eine Netzplane 19 gebildet, die einen netzförmigen Stoff aufweist. Eine hintere Stirnkante der Netzplane 19 ist an einer in Querrichtung verlaufenden Rollachse 20 befestigt, die zum Auf- und Abrollen der Netzplane 19 dient. Die Rollachse 20 verläuft parallel zu den Schwenkachsen 7 und 12 und ist hier in einem Heckbereich des Cabriolets 1 in einem oberen Randbereich eines Fondraums des Cabriolets 1 auf der Höhe seiner Gürtellinie angeordnet. Die Rollachse 20 ist ortsfest und drehbar in der Karosserie des Cabriolets 1 gelagert. Der Spriegel 8 ist als Umlenkelement zum Umlenken der abgerollten Netzplane 19 angeordnet. Dazu ist die Netzplane 19 unter dem Quersteg 9 des Spriegels 8 hindurch geführt.

In der Fig. 5A befindet sich das Windschott 2 in seiner Ruhestellung. Der Aufspannbügel 3 und der Spriegel 8 sind nach hinten auf die Höhe der Gürtellinie des Cabriolets 1 abgelegt. In der Fig. 5B ist eine Situation kurz nach dem Verschwenken des Windschotts 2 dargestellt. Sowohl der Aufspannbügel 3 als auch der Spriegel 8 sind aus der Ruhestellung leicht nach oben verschwenkt. Die Netzplane 19 ist durch die Verschwenkbewegung des Aufspannbügels 3 ein wenig von der Rollachse 20 abgerollt. Durch das Umlenken der abgerollten Netzplane 19 durch den Spriegel 8 werden zwei Wirkteilflächen aufgespannt. Eine Wirkteilfläche 21 wird zwischen dem Quersteg 9 des Spriegels 8 und dem Quersteg 4 des Aufspannbügels 3 und eine Wirkteilfläche 22 zwischen dem Quersteg 9 des Spriegels 8 und der Rollachse 20 aufgespannt. Dies ist in der Fig. 5C deutlicher zu sehen, in der eine Situation dargestellt ist, in der das Windschott 2 bereits weit verschwenkt ist und sich kurz vor seiner Wirkstellung befindet. Die beiden Wirkteilflächen 21 und 22 sind bereits deutlich ausgebildet. In der Fig. 5D befindet sich das Windschott 2 in seiner Wirkstellung. Der Aufspannbügel 3 ist im Wesentlichen vertikal nach oben verschwenkt und der Spriegel 8 um nahezu 180° nach vorne, so dass er erneut horizontal auf der Höhe der Gürtellinie des Cabriolets 1 aufliegt. Die Wirkteilfläche 21 gewährleistet einen guten Windschutz und erstreckt sich von dem Quersteg 4 bis zu dem Quersteg 9. Sie deckt dabei, abhängig von eventuellen Neigungen der Seitenholme des Aufspannbügels 3 nach innen und der Breite der Netzplane 19 in Querrichtung, eine nahezu komplette von dem Aufspannbügel 3 aufgespannte Fläche ab. Die Wirkfläche 22 erstreckt sich von dem in Höhe der Gürtellinie des Cabriolets 1 befindlichen Quersteg 9 bis zu der Rollachse 20. Die Wirkteilfläche 22 gewährleistet eine Abdeckung eines unter ihr liegenden Raums. Dieser Raum ist hier der Fondraum des Cabriolets 1.

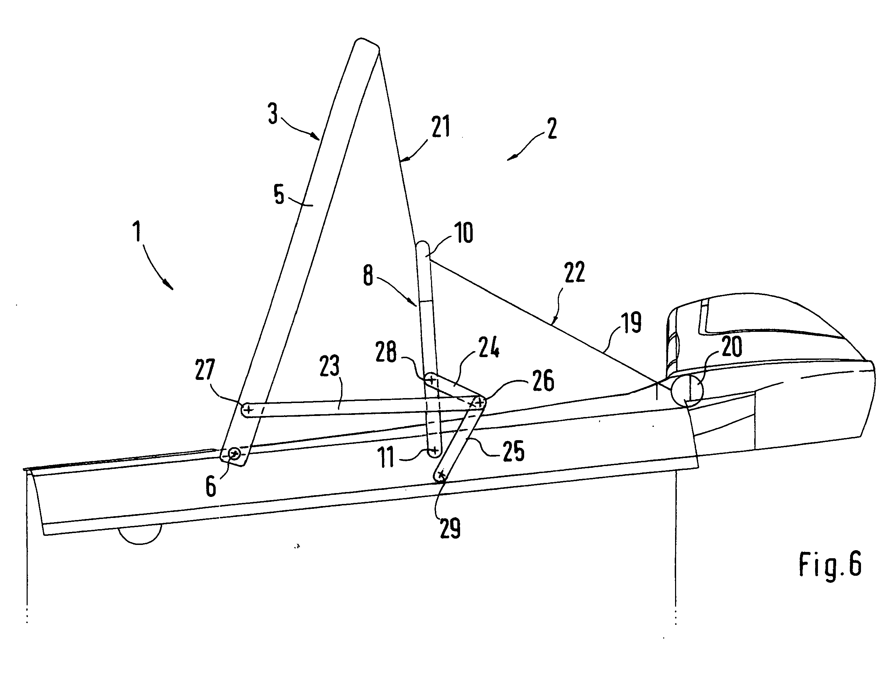

Fig. 6 zeigt eine schematische Seitenansicht eines weiteren Ausführungsbeispiels des zwischen seiner Ruhe- und seiner Wirkstellung verschwenkten Windschotts 2. Der Aufspannbügel 3 und der Spriegel 8 sind mit einem weiteren Kopplungsmechanismus miteinander verbunden, der ein Viergelenk mit vier Drehgelenken darstellt. Der weitere Kopplungsmechanismus stellt ferner ein Zwischengetriebe zum Steuern der Abläufe zwischen dem Aufspannbügel 3 und dem Spriegel 8, insbesondere bei deren Verschwenken, dar. Der weitere Kopplungsmechanismus weist drei längliche Hebel 23, 24 und 25 auf, die an jeweils einem ihrer Enden in einem gemeinsamen Drehpunkt 26 miteinander gekoppelt sind. Der Drehpunkt 26 ist nicht an dem Cabriolet 1 gelagert und somit beweglich. Ein anderes Ende des Hebels 23 ist an einem Drehpunkt 27 drehbar an dem Seitenholm 5 des Aufspannbügels 3 befestigt. Der Drehpunkt 27 ist von dem Zapfen 6, an dem der Aufspannbügel 3 schwenkbar an der Karosserieverkleidung gelagert ist, beabstandet. Ein anderes Ende des Hebels 24 ist an einem Drehpunkt 28 drehbar an dem Seitenholm 10 des Spriegels 8 befestigt. Der Drehpunkt 28 ist dabei von dem Zapfen 11, an dem der Spriegel 8 schwenkbar an der Karosserieverkleidung gelagert ist, beabstandet. Ein anderes Ende des Hebels 25 ist an einem Drehpunkt 29 drehbar an der Karosserieverkleidung des Cabriolets 1 befestigt. An dem Drehpunkt 29 ist der Antrieb angebracht, der zum Drehen des Hebels 25 dient. Die Drehbewegung des Hebels 25 überträgt sich über den gemeinsamen Drehpunkt 26 auf die Hebel 23 und 24 und über diese wiederum auf den Aufspannbügel 3 bzw. den Spriegel 8. Im Ausführungsbeispiel nach Fig. 6 ist die Rollachse 20 ebenfalls im Heckbereich des Cabriolets angeordnet und die Netzplane 19 an dem Quersteg 4 des Aufspannbügels 3 befestigt. Durch das Verschwenken von Aufspannbügel 3 und Spriegel 8 können daher die Wirkteilflächen 21 und 22 aufgespannt und abgebaut werden. Die Maße der Hebel 23-25 und die Anordnung der Drehpunkte 27 und 28 an dem Aufspannbügel 3 bzw. dem Spriegel 8 sind so gewählt, dass zwischen dem Verschwenken des Aufspannbügels 3 und demjenigen des Spriegels 8 das Übersetzungsverhältnis von 1:2 eingestellt ist.

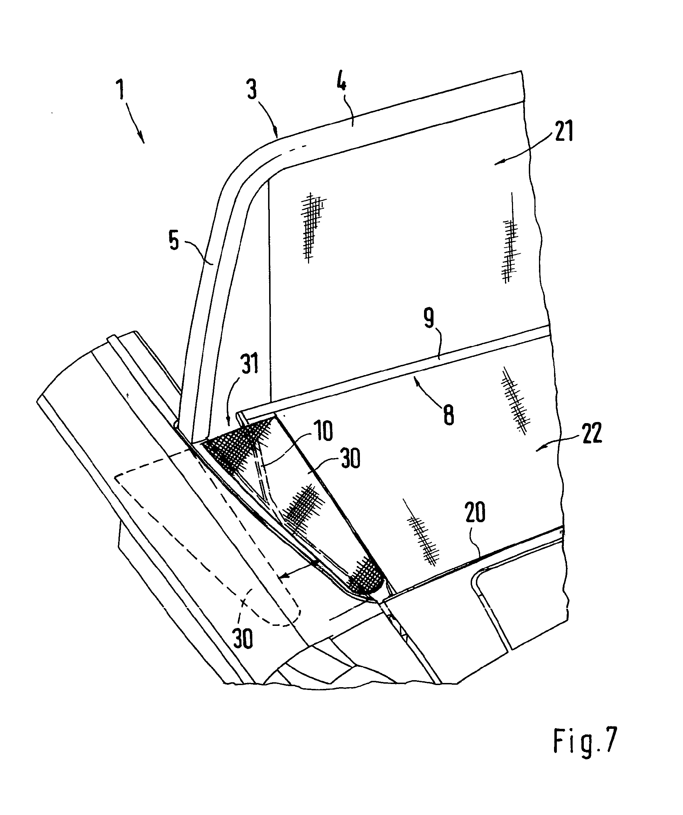

Fig. 7 zeigt eine schematische, perspektivische Darstellung des Windschotts 2 in seiner Wirkstellung mit einer seitlichen Abdeckklappe 30 zum Abdecken eines zwischen dem linken, seitlichen Bereich des Cabriolets 1 und der abgerollten, die Wirkteilfläche 22 aufspannenden Netzplane 19 vorhandenen Spalts 31. Durch die nicht gerade Formgebung der inneren Verkleidung des seitlichen Bereichs des Cabriolets 1 und der von der inneren Verkleidung beabstandeten Anordnung der linken seitlichen Außenkante der Netzplane 19 bildet sich der horizontale Spalt 31, der durch die aufgespannte Netzplane 19 nicht abgedeckt wird. Sein Abdecken wird durch die zusätzliche Abdeckklappe 30 bewirkt, die den Spalt 31 nach dem Aufstellen des Windschotts 2 in seine Wirkstellung abdeckt. Zum Abdecken des Spalts 31 ist zwischen einem Rahmen der Abdeckklappe 30 ein netzförmiger Stoff insbesondere nach Art der Netzplane 19 aufgespannt. In der Ruhestellung des Windschotts 2 befindet sich die Abdeckklappe 30 in einer Ruhestellung verdeckt unterhalb der Karosserieverkleidung. Dies ist in der Fig. 7 gestrichelt dargestellt. Zum Bewegen der Abdeckklappe 30 zwischen ihrer Ruhestellung und einer Wirkstellung, in der sie den Spalt 31 abdeckt, ist ein bestimmter Antriebsmechanismus vorgesehen. Dieser Antriebsmechanismus kann beispielsweise federbelastet oder durch ein Koppeln der Abdeckplatte 30 mit dem Antrieb zum Verschwenken des Windschotts 2 realisiert sein. Es ist auch möglich, den Antriebsmechanismus durch eine Steuerung oder Bewegung des Aufspannbügels 3 und/oder des Spriegels 8 umzusetzen. Dabei kann die Abdeckklappe 30 beispielsweise aus der Karosserieverkleidung hinausgeschoben oder aus ihr herausgedreht werden. Eine der Abdeckplatte 30 entsprechende weitere Abdeckplatte ist an dem rechten seitlichen Bereich des Cabriolets 1 ausgebildet, um einen weiteren Spalt abzudecken, der in der Wirkstellung des Windschotts 2 zwischen der Innenverkleidung des rechten seitlichen Bereichs und einer rechten seitlichen Außenkante der abgerollten Netzplane 19 auftritt.

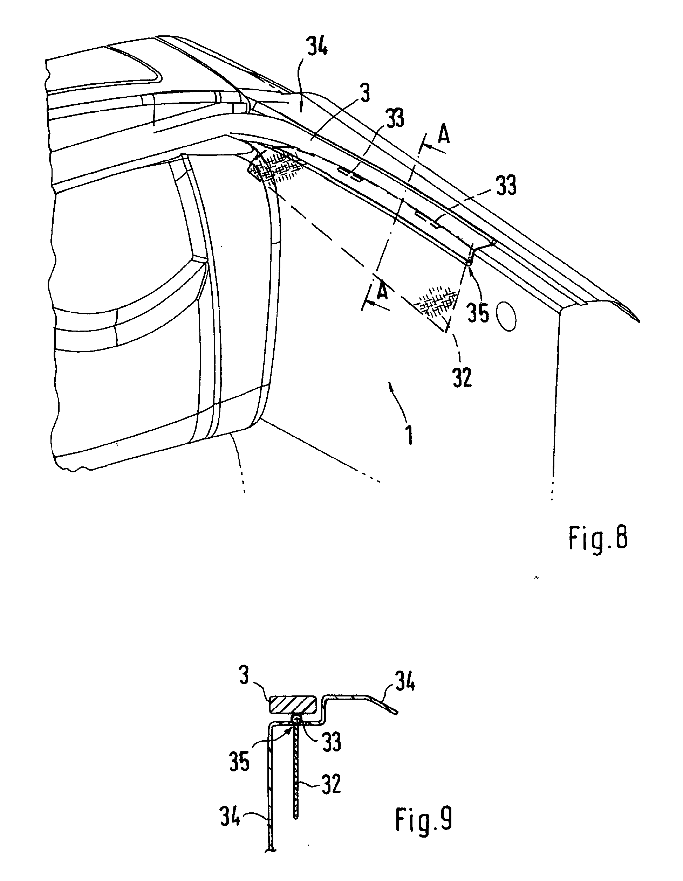

Fig. 8 zeigt eine schematische, perspektivische, teilweise geschnittene Darstellung des linken seitlichen Bereichs des Cabriolets 1 mit dem Windschott 2 in seiner Ruhestellung. An dem Seitenholm 5 des Aufspannbügels 3 ist ein seitliches Windschutzteil 32 verschwenkbar mittels zwei Scharnieren 33 befestigt. Das Windschutzteil 32 dient in der Wirkstellung des Windschotts 2 zum Gewährleisten eines zusätzlichen Windschutzes zwischen dem Seitenholm 5 des Aufspannbügels 3 und der abgerollten, den Windschutz gewährleistenden Netzplane 19. In der in der Fig. 8 dargestellten Ruhestellung des Windschotts 2 ist das Windschutzteil 32 unter einer Verkleidung 34 des seitlichen Bereichs des Cabriolets 1 verdeckt. Dazu ist es nahezu vertikal in die Verkleidung 34 eingefahren. Das Windschutzteil 32 ist somit von außen nicht sichtbar, da ein zum Einfahren des Windschutzteils 32 in der Verkleidung 34 vorgesehener Spalt 35 von oben durch den Aufspannbügel 3 abgedeckt wird. In der Fig. 8 ist ein Schnitt A-A durch einen Teil des rechten seitlichen Bereichs des Cabriolets 1 eingezeichnet.

Fig. 9 zeigt eine schematische Darstellung des Schnitts A-A nach Fig. 8 mit dem vertikal durch den Spalt 35 in die Karosserieverkleidung 34 eingefahrenen Windschutzteil 32. Dargestellt ist eines der Scharniere 33, das zum Anlenken des Windschutzteils 32 an dem Aufspannbügel 3 dient.

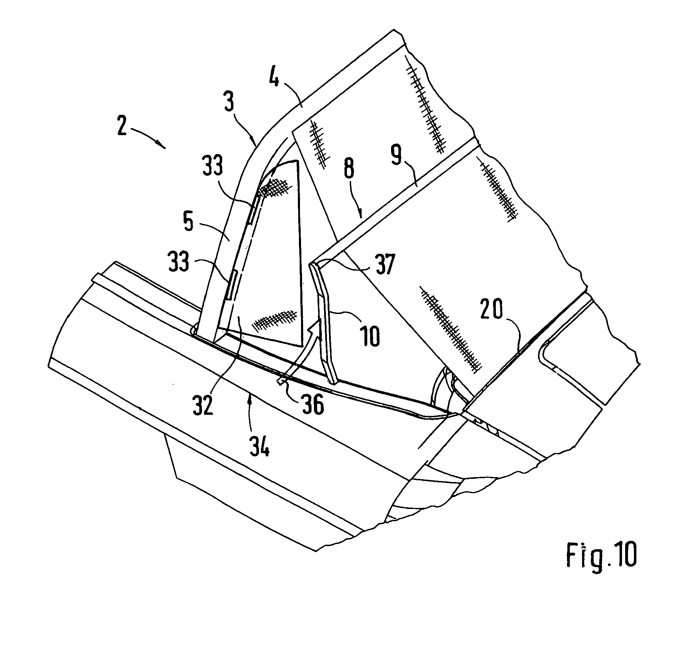

Fig. 10 zeigt eine schematische, perspektivische Darstellung des Windschotts 2 nach Fig. 8 während seinem Verschwenken. Dies ist durch eine Pfeil 36 angedeutet, der das Verschwenken des Aufspannbügels 3 und des Spriegels 8 nach oben repräsentiert. Beim Verschwenken des Aufspannbügels 3 nach oben wird das in die Verkleidung 34 eingefahrene Windschutzteil 32 aus der Verkleidung herausgezogen. Sobald es das Innere der Verkleidung 34 vollständig verlassen hat, klappt das Windschutzteil 32 nach innen. Dabei wird es durch das Verschwenken des Spriegels 8 von einer an dem Übergang von dem Seitenholm 10 zu dem Quersteg 9 an dem Spriegel 8 ausgebildeten Ecke 37, die als eine Anlaufkulisse dient, erfasst und seine Verschwenkbewegung von der Ecke 37 so gesteuert, dass das Windschutzteil 32 mit dem Verschwenken des Spriegels 8 um nahezu 90° nach vorne gedrückt wird.

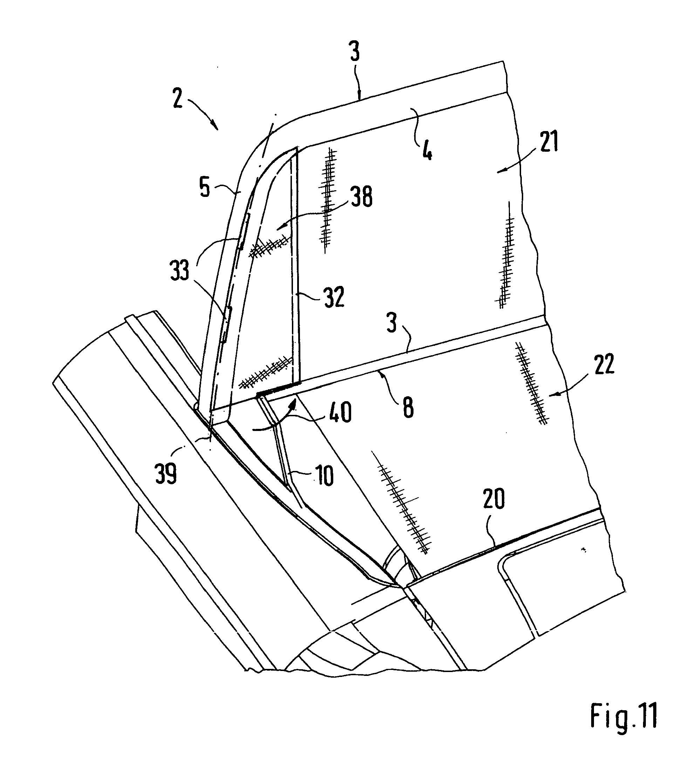

Dies ist in der Fig. 11 dargestellt, in der sich das Windschott 2 in seiner Wirkstellung befindet. Zusätzlich zu der durch die abgerollte Netzplane 19 aufgespannten Wirkteilfläche 21 ist durch das Windschutzteil 32 eine seitliche Wirkfläche 38 zum Erzeugen eines zusätzlichen Windschutzes für den Passagierraum aufgespannt. Dazu ist das Windschutzteil 32 ausgehend von seiner Ruhestellung um eine Schwenkachse 39 um annähernd 90° in eine Wirkstellung verschwenkt worden, in der es die Wirkfläche als zusätzlichen Windschutz aufspannt. Dieses Verschwenken des Windschutzteils 32 ist in der Fig. 11 durch einen Pfeil 40 kenntlich gemacht. Zum Erzeugen der Wirkfläche 38 ist zwischen einem Rahmen des Windschutzteils 32 ein netzförmiger Stoff insbesondere nach Art der Netzplane 19 aufgespannt. Entsprechend dem anhand der Fig. 8-11 beschriebenen Windschutzteil 32 ist im vorliegenden Ausführungsbeispiel an dem rechten Seitenholm des Aufspannbügels 3 ein weiteres Windschutzteil ausgebildet, um eine weitere zusätzliche seitliche Wirkfläche für einen zusätzlichen Windschutz zwischen dem rechten Seitenholm und der von der Netzplane 19 aufgespannten Wirkteilfläche 21 zu bilden.

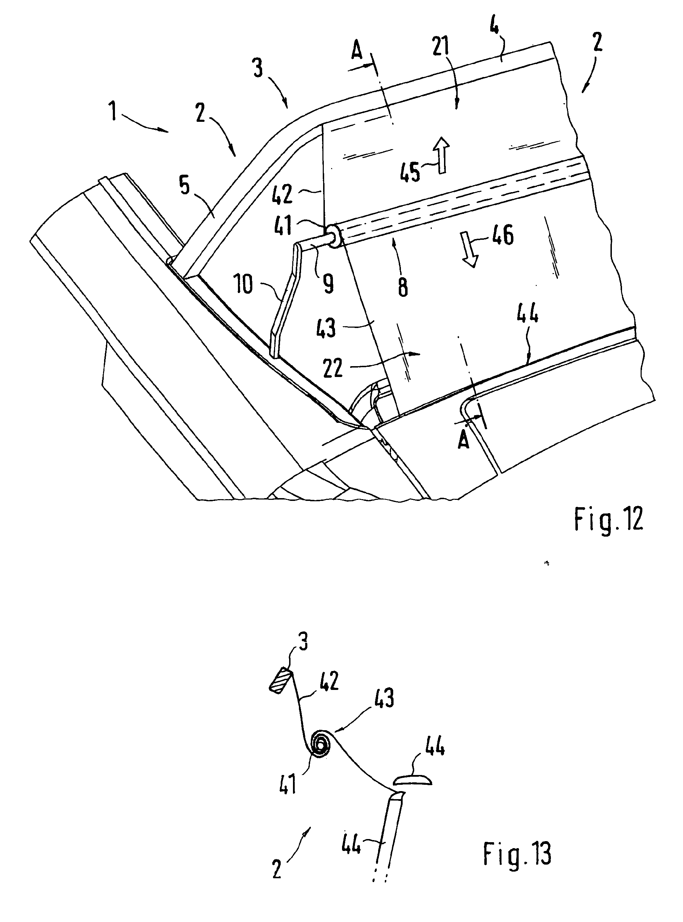

Fig. 12 zeigt eine schematische, perspektivische Darstellung eines anderen Ausführungsbeispiels des Windschotts 2 mit einer an dem Quersteg 9 des Spriegels 8 ausgebildeten drehbaren Rollachse 41. An der Rollachse 41 sind Stirnenden von zwei Netzplanen 42 und 43 befestigt. Ein anderes Stirnende der Netzplane 42 ist an dem Quersteg 4 des Aufspannbügels 3 und ein anderes Stirnende der Netzplane 43 an einer Karosserieverkleidung 44, insbesondere im Heckbereich, des Cabriolets 1 befestigt. In einem aufgerollten Zustand sind die beiden Netzplanen 42, 43 übereinander liegend auf der Rollachse 41 aufgewickelt. Durch das Verschwenken des Aufspannbügels 3 und des Spriegels 8 dreht sich die Rollachse 41 und die Netzplanen 42, 43 rollen in unterschiedlichen Richtungen von der Rollachse 41 ab. Die Netzplane 42 spannt beim Verschwenken des Windschotts 2 in seine Wirkstellung die Wirkteilfläche 21 auf. Dies ist in der Fig. 12 durch einen Pfeil 45 angedeutet. Die Netzplane 43 spannt gleichzeitig die Wirkteilfläche 22 auf. Dies ist in der Fig. 12 durch einen Pfeil 46 angedeutet. In der Fig. 12 ist ein Schnitt A-A durch das Windschott 2 eingezeichnet.

Fig. 13 zeigt eine schematische Darstellung des Schnitts A-A nach Fig. 12. In dieser Schnittdarstellung ist die doppelte Aufwicklung der beiden Netzplanen 42 und 43 auf dem als Rollachse 41 ausgestalteten Quersteg 9 des Spriegels 8 zu sehen. Die Netzplane 42 ist zusätzlich an dem Quersteg 4 des Aufspannbügels 3 und die Netzplane 43 zusätzlich an der Karosserieverkleidung 44 befestigt. Dadurch werden die beiden Netzplanen 42, 43 beim Verschwenken des Windschotts 2 automatisch von der Rollachse 41 abgerollt. Der Aufrollvorgang zum Aufrollen der abgerollten Netzplanen 42, 43 erfolgt in umgekehrter Weise. Dabei werden die beiden Netzplanen 42, 43 wieder übereinander liegend auf die Rollachse 41 aufgerollt.

In dem anhand der Fig. 12 und 13 beschriebenen Ausführungsbeispiel sind die Netzplanen 42, 43 auf einer gemeinsamen Rollachse 41 übereinander liegend aufgewickelt. Es ist jedoch ebenso möglich, für jede der beiden Netzplanen 42, 43 an dem Quersteg 9 des Spriegels eine eigene Rollachse vorzusehen.

## Patentansprüche

1. Windschott (2) für ein Kraftfahrzeug (1) mit einem schwenkbaren Aufspannbügel (3) an dem ein flexibles Flächengebilde (19; 42) befestigt ist, das um eine Rollachse (20; 41) auf- und abrollbar ist, und einem mit dem Aufspannbügel (3) verbundenen Spriegel (8), wobei der Spriegel (8) um eine in Querrichtung des Kraftfahrzeugs (1) verlaufende, ortsfeste Schwenkachse (12) schwenkbar lagerbar ist, und der Aufspannbügel (3) über einen beweglichen Kopplungsmechanismus (13; 23-25) mit dem Spriegel (8) verbunden ist, **dadurch gekennzeichnet, dass** der Aufspannbügel um eine in Querrichtung des Kraftfahrzeugs (1) verlaufende, ortsfeste Schwenkachse (7) schwenkbar lagerbar ist, die Rollachse parallel zur Schwenkachse (7) des Aufspannbügels (3) verläuft, und die Schwenkachse des Spriegels in Längsrichtung des Kraftfahrzeugs (1) von der Schwenkachse (7) des Aufspannbügels (3) beabstandet ist.

2. Windschott nach Anspruch 1, **dadurch gekennzeichnet, dass** der Kopplungsmechanismus (13; 23-25) in seitlichen Bereichen (5, 10) des Aufspannbügels (3) und des Spriegels (8) mit diesen verbunden ist.

3. Windschott nach Anspruch 1 oder 2, **dadurch gekennzeichnet, dass** der Kopplungsmechanismus (13; 23-25) sowohl mit dem Aufspannbügel (3) als auch mit dem Spriegel (8) drehbar verbunden ist.

4. Windschott nach Anspruch 3, **dadurch gekennzeichnet, dass** der Kopplungsmechanismus (13; 23-25) mit dem Aufspannbügel (3) und dem Spriegel (8) nach Art eines Viergelenks verbunden ist.

5. Windschott nach Anspruch 3 oder 4, **dadurch gekennzeichnet, dass** der Kopplungsmechanismus einen Lenkhebel (13) aufweist, der mit dem Aufspannbügel (3) und dem Spriegel (8) verbunden ist, und ein als Verbindungsstelle zwischen dem Aufspannbügel (3) und dem Lenkhebel (13) ausgebildeter Drehpunkt (14) von einem zum schwenkbaren Lagern des Aufspannbügels (3) ausgebildeten Drehpunkt (6) des Aufspannbügels (3) beabstandet und ein als Verbindungsstelle zwischen dem Spriegel (8) und dem Lenkhebel (13) ausgebildeter Drehpunkt (15) von einem zum schwenkbaren Lagern des Spriegels (8) ausgebildeten Drehpunkt (11) des Spriegels (8) beabstandet ist.

6. Windschott nach Anspruch 5, **dadurch gekennzeichnet, dass** der zum schwenkbaren Lagern des Spriegels (8) ausgebildete Drehpunkt (11) als ein Antriebspunkt zum Anschießen eines Antriebs (18) zum Verschwenken des Windschotts (2) ausgestaltet ist.

7. Windschott nach Anspruch 3 oder 4, **dadurch gekennzeichnet, dass** der Kopplungsmechanismus einen ersten Lenkhebel (23), einen zweiten Lenkhebel (24) und einen dritten Lenkhebel (25) aufweist, die in einem gemeinsamen Drehpunkt (26) drehbar miteinander verbunden sind, wobei der erste Lenkhebel (23) ferner mit dem Aufspannbügel (3) und der zweite Lenkhebel (24) mit dem Spriegel (8) drehbar verbunden sind und der dritte Lenkhebel (25) einen Antriebspunkt (29) zum Anschließen eines Antriebs (18) zum Verschwenken des Windschotts (2) aufweist.

8. Windschott nach einem der vorhergehenden Ansprüche, **dadurch gekennzeichnet, dass** der Kopplungsmechanismus (13; 23-25) so angeordnet und mit dem Aufspannbügel (3) und dem Spriegel (8) verbunden ist, dass zwischen einem Verschwenken des Aufspannbügels (3) und einem Verschwenken des Spriegels (8) ein Übersetzungsverhältnis von in etwa 1:2 festgelegt ist.

9. Windschott nach einem der vorhergehenden Ansprüche, **dadurch gekennzeichnet, dass** die Rollachse (20) zum Auf- und Abrollen des Flächengebildes (19) in dem Kraftfahrzeug (1), insbesondere in seinem Heckbereich, ortsfest ausbildbar und der Spriegel (8) als Umlenkelement zum Umlenken des abgerollten Flächengebildes (19) angeordnet ist.

10. Windschott nach einem der Ansprüche 1-8, **dadurch gekennzeichnet, dass** die Rollachse (41) zum Auf- und Abrollen des Flächengebildes (19; 42, 43) an dem Spriegel (8), insbesondere an einem parallel zur Schwenkachse (12) des Spriegels (8) verlaufenden Quersteg (9) des Spriegels (8), ausgebildet ist.

11. Windschott nach Anspruch 10, **dadurch gekennzeichnet, dass** ein weiteres flexibles Flächengebilde (43) vorhanden ist, das an dem Kraftfahrzeug (1), insbesondere in seinem Heckbereich, ortsfest befestigbar und um die an dem Spriegel (8) ausgebildete Rollachse (41) auf- und abrollbar ist.

12. Windschott nach Anspruch 11, **dadurch gekennzeichnet, dass** die beiden Flächengebilde (42, 43) so angeordnet sind, dass sie um die gleiche Rollachse (41) auf- und abrollbar sind und in ihren aufgerollten Zuständen übereinander liegend auf der Rollachse (41) aufgewickelt sind.

13. Windschott nach einem der vorhergehenden Ansprüche, **dadurch gekennzeichnet, dass** das Flächengebilde (19; 42, 43) einen netzförmigen Stoff aufweist.

14. Windschott nach einem der vorhergehenden Ansprüche, **dadurch gekennzeichnet, dass** der Aufspannbügel (3) und der Spriegel (8) in sich gegenüber liegenden, seitlichen Bereichen insbesondere einer Karosserie des Kraftfahrzeugs (1) schwenkbar lagerbar sind.

15. Windschott nach Anspruch 14, **dadurch gekennzeichnet, dass** seitliche Abdeckteile (30) vorhanden sind, die so ausgestaltet und angeordnet sind, dass sie in einer Wirkstellung des Windschotts (2), in der es als Windschutz dient, Abdeckstellungen zum im Wesentlichen horizontalen Abdecken von zwischen den seitlichen Bereichen des Kraftfahrzeugs (1) und dem abgerollten Flächengebilde (19) vorhandenen Spalte (31) einnehmen.

16. Windschott nach einem der vorhergehenden Ansprüche, **dadurch gekennzeichnet, dass** seitliche Windschutzteile (32) vorhanden sind, die so ausgestaltet und schwenkbar an dem Aufspannbügel (3) angeordnet sind, dass sie in der Wirkstellung des Windschotts (2), in der es als Windschutz dient, zwischen seitlichen Bereichen des Aufspannbügels (3) und dem abgerollten, den Windschutz gewährleistenden Flächengebilde (19) seitliche Wirkflächen (38) zum Erzeugen eines zusätzlichen Windschutzes aufspannen.

17. Windschott nach Anspruch 16, **dadurch gekennzeichnet, dass** der Aufspannbügel (3), die an ihm angebrachten seitlichen Windschutzteile (32) und der Spriegel (8) so ausgebildet und angeordnet sind, dass der Spriegel (8) beim Verschwenken des Windschotts (2) in seine Wirkstellung die seitlichen Windschutzteile (32) so verschwenkt, dass sie die zusätzlichen Wirkflächen (38) aufspannen.

18. Windschott nach einem der Ansprüche 14-17, **dadurch gekennzeichnet, dass** die seitlichen Abdeckteile (30) und/oder die seitlichen Windschutzteile (32) so ausgestaltet und angeordnet sind, dass sie in einer Ruhestellung des Windschotts (2), in der es nicht als Windschutz dient, unter einer Verkleidung des Kraftfahrzeugs (1) verdeckt sind.

19. Windschott nach einem der vorhergehenden Ansprüche, **dadurch gekennzeichnet, dass** der Kopplungsmechanismus (13; 23-25) unter einer Verkleidung des Kraftfahrzeugs (1) verdeckt anordenbar ist.

20. Kraftfahrzeug, insbesondere Cabriolet (1), mit einem Windschott (2) nach einem der vorhergehenden Ansprüche.

## Claims

1. Wind stop (2) for a motor vehicle (1) with a pivotable deployment bow (3) to which a flexible planar structure (19; 42) is fastened, which planar structure can be rolled up and unrolled about a rolling spindle (20; 41), and with a stay (8) which is connected to the deployment bow (3), wherein the stay (8) can be mounted so as to be pivotable about a positionally fixed pivot axis (12) running in the transverse direction of the motor vehicle (1), and the deployment bow (3) is connected to the stay (8) via a moveable coupling mechanism (13; 23 - 25), **characterized in that** the deployment bow can be mounted so as to be pivotable about a positionally fixed pivot axis (7) running in the transverse direction of the motor vehicle (1), the rolling spindle runs parallel to the pivot axis (7) of the deployment bow (3), and the pivot axis of the stay is spaced apart in the longitudinal direction of the motor vehicle (1) from the pivot axis (7) of the deployment bow (3).

2. Wind stop according to Claim 1, **characterized in that** the coupling mechanism (13; 23 - 25) is connected in lateral regions (5, 10) of the deployment bow (3) and of the stay (8) to said deployment bow and stay.

3. Wind stop according to Claim 1 or 2, **characterized in that** the coupling mechanism (13; 23 - 25) is connected rotatably both to the deployment bow (3) and to the stay (8).

4. Wind stop according to Claim 3, **characterized in that** the coupling mechanism (13; 23 - 25) is connected to the deployment bow (3) and to the stay (8) in the manner of a four-bar linkage.

5. Wind stop according to Claim 3 or 4, **characterized in that** the coupling mechanism has a steering lever (13) which is connected to the deployment bow (3) and the stay (8), and a pivot point (14) designed as a connecting point between the deployment bow (3) and the steering lever (13) is spaced apart from a pivot point (6) of the deployment bow (3), which pivot point is designed for the pivotable mounting of the deployment bow (3), and a pivot point (15) designed as a connecting point between the stay (8) and the steering lever (13) is spaced apart from a pivot point (11) of the stay (8), which pivot point is designed for the pivotable mounting of the stay (8).

6. Wind stop according to Claim 5, **characterized in that** the pivot point (11) designed for the pivotable mounting of the stay (8) is configured as a driving point for the connection of a drive (18) for the pivoting of the wind stop (2).

7. Wind stop according to Claim 3 or 4, **characterized in that** the coupling mechanism has a first steering lever (23), a second steering lever (24) and a third steering lever (25) which are connected rotatably to one another in a common pivot point (26), wherein the first steering lever (23) is furthermore connected rotatably to the deployment bow (3) and the second steering lever (24) to the stay (8), and the third steering lever (25) has a driving point (29) for the connection of a drive (18) for pivoting the wind stop (2).

8. Wind stop according to one of the preceding claims, **characterized in that** the coupling mechanism (13; 23 - 25) is arranged and connected to the deployment bow (3) and the stay (8) in such a manner that a transmission ratio of approximately 1:2 is established between a pivoting of the deployment bow (3) and a pivoting of the stay (8).

9. Wind stop according to one of the preceding claims, **characterized in that** the rolling spindle (20) for rolling up and unrolling the planar structure (19) can be formed in a fixed position in the motor vehicle (1), in particular in the rear region thereof, and the stay (8) is arranged as a deflecting element for deflecting the unrolled planar structure (19).

10. Wind stop according to one of Claims 1 - 8, **characterized in that** the rolling spindle (41) for rolling up and unrolling the planar structure (19; 42, 43) is formed on the stay (8), in particular on a transverse web (9) of the stay (8), which transverse web runs parallel to the pivot axis (12) of the stay (8).

11. Wind stop according to Claim 10, **characterized in that** there is a further, flexible planar structure (43) which is fastenable in a positionally fixed manner to the motor vehicle (1), in particular in the rear region thereof, and about which the rolling spindle (41) formed on the stay (8) can be rolled up and unrolled.

12. Wind stop according to Claim 11, **characterized in that** the two planar structures (42, 43) are arranged in such a manner that they can be rolled up and unrolled about the same rolling spindle (41) and, in the rolled-up states thereof, are wound up lying one above the other on the rolling spindle (41).

13. Wind stop according to one of the preceding claims, **characterized in that** the planar structure (19; 42, 43) has a net-like material.

14. Wind stop according to one of the preceding claims, **characterized in that** the deployment bow (3) and the stay (8) can be mounted pivotably in opposite lateral regions in particular of a body of the motor vehicle (1).

15. Wind stop according to Claim 14, **characterized in that** there are lateral cover parts (30) which are configured and arranged in such a manner that, in an operative position of the wind stop (2), in which said wind stop serves as protection against wind, said cover parts take up cover positions for the substantially horizontal covering of gaps (31) present between the lateral regions of the motor vehicle (1) and the unrolled planar structure (19).

16. Wind stop according to one of the preceding claims, **characterized in that** there are lateral wind protection parts (32) which are configured and are arranged pivotably on the deployment bow (3) in such a manner that, in the operative position of the wind stop (2), in which said wind stop serves as protection against wind, said wind protection parts span lateral operative surfaces (38) between lateral regions of the deployment bow (3) and the unrolled planar structure (19), which ensures protection against wind, in order to produce additional protection against wind.

17. Wind stop according to Claim 16, **characterized in that** the deployment bow (3), the lateral wind protection parts (32) attached thereto, and the stay (8) are designed and arranged in such a manner that, when the wind stop (2) is pivoted into the operative position thereof, the stay (8) pivots the lateral wind protection parts (32) in such a manner that they span the additional operative surfaces (38).

18. Wind stop according to one of Claims 14 - 17, **characterized in that** the lateral cover parts (30) and/or the lateral wind protection parts (32) are configured and arranged in such a manner that, in a rest position of the wind stop (2), in which said wind stop does not serve as protection against wind, said cover parts and/or wind protection parts are concealed under a panelling of the motor vehicle (1).

19. Wind stop according to one of the preceding claims, **characterized in that** the coupling mechanism (13; 23 - 25) can be arranged concealed under a panelling of the motor vehicle (1).

20. Motor vehicle, in particular convertible (1) with a wind stop (2) according to one of the preceding claims.

## Revendications

1. Pare-vent (2) pour un véhicule automobile (1), avec un étrier de serrage pivotant (3) sur lequel est fixé un élément plat flexible (19; 42), qui peut être enroulé et déroulé autour d'un axe d'enroulement (20; 41) et avec un arceau (8) assemblé à l'étrier de serrage (3), dans lequel l'arceau (8) peut être monté de façon pivotante autour d'un axe de pivotement stationnaire (12) s'étendant en direction transversale du véhicule automobile (1), et l'étrier de serrage (3) est relié à l'arceau (8) au moyen d'un mécanisme de couplage mobile (13; 23-25), **caractérisé en ce que** l'étrier de serrage (3) peut être monté de façon pivotante autour d'un axe de pivotement stationnaire (7) s'étendant en direction transversale du véhicule automobile (1), l'axe d'enroulement s'étend parallèlement à l'axe de pivotement (7) de l'étrier de serrage (3), et l'axe de pivotement de l'arceau est espacé, dans la direction longitudinale du véhicule automobile (1), de l'axe de pivotement (7) de l'étrier de serrage (3).

2. Pare-vent selon la revendication 1, **caractérisé en ce que** le mécanisme de couplage (13; 23-25) est relié à l'étrier de serrage (3) et à l'arceau (8) dans des régions latérales (5, 10) de ceux-ci.

3. Pare-vent selon la revendication 1 ou 2, **caractérisé en ce que** le mécanisme de couplage (13; 23-25) est relié de façon rotative aussi bien à l'étrier de serrage (3) qu'à l'arceau (8).

4. Pare-vent selon la revendication 3, **caractérisé en ce que** le mécanisme de couplage (13; 23-25) est relié à l'étrier de serrage (3) et à l'arceau (8) à la manière d'un quadrilatère articulé.

5. Pare-vent selon la revendication 3 ou 4, **caractérisé en ce que** le mécanisme de couplage présente un levier de commande (13), qui est relié à l'étrier de serrage (3) et à l'arceau (8), et un point de rotation (14) constituant un point de liaison entre l'étrier de serrage (3) et le levier de commande (13) est espacé d'un point de rotation (6) de l'étrier de serrage (3) conçu pour le support pivotant de l'étrier de serrage (3) et un point de rotation (15) constituant un point de liaison entre l'arceau (8) et le levier de commande (13) est espacé d'un point de rotation (11) de l'arceau (8) conçu pour le support pivotant de l'arceau (8).

6. Pare-vent selon la revendication 5, **caractérisé en ce que** le point de rotation (11) conçu pour le support pivotant de l'arceau (8) est configuré en tant que point d'entraînement pour connecter un entraînement (18) pour le pivotement du pare-vent (2).

7. Pare-vent selon la revendication 3 ou 4, **caractérisé en ce que** le mécanisme de couplage présente un premier levier de commande (23), un deuxième levier de commande (24) et un troisième levier de commande (25), qui sont reliés l'un à l'autre de façon rotative en un point de rotation commun (26), dans lequel le premier levier de commande (23) est en outre relié de façon rotative à l'étrier de serrage (3) et le deuxième levier de commande (24) est relié de façon rotative à l'arceau (8) et le troisième levier de commande (25) présente un point d'entraînement (29) pour connecter un entraînement (18) pour le pivotement du pare-vent (2).

8. Pare-vent selon l'une quelconque des revendications précédentes, **caractérisé en ce que** le mécanisme de couplage (13; 23-25) est disposé et relié à l'étrier de serrage (3) et à l'arceau (8) de telle manière qu'un rapport de transmission d'environ 1:2 soit établi entre un pivotement de l'étrier de serrage (3) et un pivotement de l'arceau (8).

9. Pare-vent selon l'une quelconque des revendications précédentes, **caractérisé en ce que** l'axe d'enroulement (20) destiné à l'enroulement et au déroulement de l'élément plat (19) peut être réalisé de façon stationnaire dans le véhicule automobile (1), en particulier dans sa région arrière, et l'arceau (8) est disposé en tant qu'élément de déviation pour dévier l'élément plat déroulé (19).

10. Pare-vent selon l'une quelconque des revendications 1 à 8, **caractérisé en ce que** l'axe d'enroulement (41) destiné à l'enroulement et au déroulement de l'élément plat (19; 42, 43) est formé sur l'arceau (8), en particulier sur une nervure transversale (9) de l'arceau (8) qui est parallèle à l'axe de pivotement (12) de l'arceau (8).

11. Pare-vent selon la revendication 10, **caractérisé en ce qu'**il se trouve un autre élément plat flexible (43), qui peut être fixé de façon stationnaire au véhicule automobile (1), en particulier dans sa région arrière, et qui peut être enroulé et déroulé autour de l'axe d'enroulement (41) formé sur l'arceau (8).

12. Pare-vent selon la revendication 11, **caractérisé en ce que** les deux éléments plats (42, 43) sont disposés de telle manière qu'ils puissent être enroulés et déroulés autour du même axe d'enroulement (41) et que, dans leur état enroulé, ils soient enroulés l'un au-dessus de l'autre sur l'axe d'enroulement (41).

13. Pare-vent selon l'une quelconque des revendications précédentes, **caractérisé en ce que** l'élément plat (19; 42, 43) présente une étoffe en forme de filet.

14. Pare-vent selon l'une quelconque des revendications précédentes, **caractérisé en ce que** l'étrier de serrage (3) et l'arceau (8) peuvent être supportés de façon pivotante dans des régions latérales opposées l'une à l'autre, en particulier d'une carrosserie du véhicule automobile (1).

15. Pare-vent selon la revendication 14, **caractérisé en ce qu'**il se trouve des parties de recouvrement latérales (30), qui sont configurées et disposées de telle manière que, dans une position active du pare-vent (2), dans laquelle il fait office de protection contre le vent, elles occupent des positions de recouvrement en vue du recouvrement essentiellement horizontal de fentes (31) existant entre les régions latérales du véhicule automobile (1) et l'élément plat enroulé (19).

16. Pare-vent selon l'une quelconque des revendications précédentes, **caractérisé en ce qu'**il se trouve des parties latérales de protection contre le vent (32), qui sont configurées et disposées de façon pivotante sur l'étrier de serrage (3), de telle manière que, dans la position active du pare-vent (2), dans laquelle il fait office de protection contre le vent, elles créent entre des régions latérales de l'étrier de serrage (3) et l'élément plat déroulé (19), garantissant la protection contre le vent, des faces actives latérales (38) afin de produire une protection supplémentaire contre le vent.

17. Pare-vent selon la revendication 16, **caractérisé en ce que** l'étrier de serrage (3), les parties latérales de protection contre le vent (32) déposées sur lui et l'arceau (8) sont configurés et disposés de telle manière que, lors du pivotement du pare-vent (2) dans sa position active, l'arceau (8) fasse pivoter les parties latérales de protection contre le vent (32) de telle manière qu'elles créent les faces actives supplémentaires (38).

18. Pare-vent selon l'une quelconque des revendications 14 à 17, **caractérisé en ce que** les parties latérales de recouvrement (30) et/ou les parties latérales de protection contre le vent (32) sont configurées et disposées de telle manière que, dans une position de repos du pare-vent (2), dans laquelle il ne fait pas office de protection contre le vent, elles soient dissimulées en dessous d'un habillage du véhicule automobile (1).

19. Pare-vent selon l'une quelconque des revendications précédentes, **caractérisé en ce que** le mécanisme de couplage (13; 23-25) peut être disposé de façon dissimulée en dessous d'un habillage du véhicule automobile (1).

20. Véhicule automobile, en particulier cabriolet (1), comportant un pare-vent (2) selon l'une quelconque des revendications précédentes.
